# EUROPÄISCHE PATENTSCHRIFT

(11) **EP 0 756 606 B1**
(45) Veröffentlichungstag und Bekanntmachung des Hinweises auf die Patenterteilung: **25.02.1998**
(21) Anmeldenummer: 95915179.6
(22) Anmeldetag: 01.04.1995
(51) Int. Cl.: C08F 20/34, C08F 20/60

(54) **Verwendung von Homo- und Copolymerisaten als Absorptionsmittel für wässrige Säuren oder Laugen**
Use of homo- and copolymers as absorbants for aqueous acids or alkalis
Utilisation d'homo- et copolymères comme absorbants pour des solutions aqueuses d'acides ou d'alcalins

(30) Priorität: 11.04.1994 DE 4412153
(43) Veröffentlichungstag der Anmeldung: 05.02.1997
(73) Patentinhaber: STOCKHAUSEN GmbH & CO. KG, 47805 Krefeld (DE)
(72) Erfinder: DAHMEN, Kurt, D-41239 Mönchengladbach (DE); PEPPMÖLLER, Reinmar, D-47802 Krefeld (DE); GÜNTHER, Uwe, D-47918 Tönisvorst (DE)
(74) Vertreter: Klöpsch, Gerald, Dr.-Ing. Patentanwalt
(86) Internationale Anmeldenummer: EP9501218
(87) Internationale Veröffentlichungsnummer: WO9527743

(56) Entgegenhaltungen:
- EP-A- 0 188 963
- EP-A- 0 238 326
- EP-A- 0 408 433

## Beschreibung

Die Erfindung betrifft die Verwendung von schwach vernetzten, polykationischen Homo- und Copolymerisaten aus quaternierten, monoethylenisch ungesättigten Carbonsäureaminoestern und/oder -amiden als Absorptionsmittel für wäßrige Sauren oder Laugen. Die Polymerisate werden als Granulat oder Pulver eingesetzt und können alleine oder in Abmischung mit konventionellem, porösem, anorganischem Material sowie zusammen mit Vlies- und Faserstoffen verwendet werden. Ihre Aufgabe ist es, stark ätzende, wäßrige Lösungen schnell und vollständig zu binden.

Als Absorptionsmittel für Säuren und Basen wurden bisher praktisch ausschließlich Stoffe eingesetzt, die sich gegenüber diesen aggressiven Medien weitgehend indifferent verhalten wie Sand, Kieselgur, Tonerde und Bauxit. Ihre Aufnahmefähigkeit ist relativ gering, da diese von der Korngröße und der Oberfläche pro Gewichtseinheit abhängt. Synthetische organische Produkte auf Polymerbasis aus modifizierter Stärke oder Zellulose, wie sie in den deutschen Offenlegungsschriften 26 14 662, 2712 043, 28 13 634 und 35 23 617 A1 beschrieben werden, besitzen zwar eine hohe Wasseraufnahmekapazität, sind jedoch gegenüber Säuren aufgrund ihres Ladungscharakters völlig unbefriedigend. Ähnlich verhält es sich mit Polymerprodukten aus teilneutralisierter Acrylsäure und Methacrylsäure, wie sie in einer Fülle von Veröffentlichungen insbesondere für Hygiene- und Inkontinenzartikel vorgestellt werden. Derartige Absorptionsmittel sind z.B. in den EP-A 0 513 780 A1, 0 516 925 A1 und 0 530 438 A1 beschrieben.

Aus der US 4 111 922 sind teilchenförmige, feste Mischpolymerisate von ungesättigten, radikalisch polymerisierbaren, quartären Ammoniumverbindungen und Acrylsäure oder Acrylamid sowie geringen Mengen eines Vernetzungsmittels bekannt, die aber ebenfalls nur zur Aufnahme von Wasser bzw. Urin geeignet sind. Ebenso verhält es sich mit einem Mischpolymerisat aus Acrylamidomethylpropansulfonsäure, Acrylsäure oder Acrylamid und geringen Mengen eines Vernetzungsmittels, wie in EP-A 68 189 beschrieben wird.

Absorptionsmittel auf Basis salzartiger (kationischer), ethylenisch ungesättigter Monomerer werden in der deutschen Offenlegungsschrift 35 05 920 A1 beschrieben und ihre hohe Anfangsquellgeschwindigkeit gegenüber künstlichem Urin herausgestellt. Hinweise auf eine Verwendbarkeit zur Aufnahme von stark ätzenden Säuren und Laugen fehlen.

Harze mit hohem Absorptionsvermögen gegenüber starken Säuren sollen nach der japanischen Schrift JP 89-185 634 durch Copolymerisation von Acrylsäureestern oder Styrol mit Kondensationsprodukten von Acrylsäure bzw. Methacrylsäure und Dimethylaminoalkanolen bzw. Dimethylaminoalkylaminen herstellbar sein. Es handelt sich um Copolymerisate, die erst bei Kontakt mit Säure kationischen Charakter erhalten wie z.B bei Verwendung der säurebindenden Harze in schwefelsäurehaltigen Bleiakkumulatoren anstelle der üblichen säureresistenten Vliese. Es wird angeführt, daß aufgrund des ausgelösten Druckes auf die Akkumulatorplatten eine wesentlich höhere Lebensdauer der Elektroden erreicht wird.

In der EP,A,0238326 (D1) wird ein Verfahren zur Herstellung von Silofutter (Silage) beschrieben, wonach der Silage ein wasserabsorbierendes Material zugesetzt wird, um einen Nährstoffverlust der Silage durch flüssige Abwässer während der Silolagerung zu verhindern. Als wasserabsorbierendes Mittel können wasserquellbare, d.h. vernetzte kationische oder anionische Polymere auf der Basis von wasserlöslichen ethylenisch ungesättigten Monomeren, bevorzugt Acrylmonomeren eingesetzt werden. Das bevorzugt anionische wasserquellbare Polymer wird dem Siloinhalt zugesetzt und absorbiert die entstehende Silageflüssigkeit, so daß die darin enthaltenen Nährstoffe Bestandteil des Silagefutters bleiben und nicht mit dem Abwasser verloren gehen. Anionische Polymere (Beispiele 1-3 und 5-8) werden bevorzugt, weil sie während der Silageproduktion durch bestimmte Bakterien zu nicht freßbarem Silofutter abgebaut werden. So wird durch Bakterien Buttersäure erzeugt, welche das Silofutter ungenießbar macht. Zur Unterdrückung des Wachstums derartiger Bakterien wird das Wachstum solcher Bakterien gefördert, die, wie Milchsäure, genießbares Futter erzeugen. Zur Förderung des Wachstums von Milchsäurebakterien wird der pH-Wert, beispielsweise durch Zusatz von Säuren herabgesetzt.

In der EP,A,0408433 werden ampholytische Copolymere auf der Basis von vernetzten, kationischen Acrylatderivaten wie N,N-Dimethylaminoethylacrylat als Salz oder in quaternisierter Form mit Acrylsäure oder ihrem Natrium- oder Kaliumsalz zur Absorption von salzhaltigen Wässern wie Meerwasser beschrieben.

In der EP,A,0188963 werden ebenfalls ampholytische, d. h. anionische und kationische Einheiten enthaltende, wasserabsorbierende Harze auf der Basis von Copolymeren von kationischen Acrylsäurederivaten wie Dialkylaminoalkylacrylaten in Salzform oder quaternierter Form mit Acrylsäuze zur Absorption von salzhaltigen Flüssigkeiten beschrieben.

Es wurde nun gefunden, daß man durch radikalische Polymerisation von wasserlöslichen, monoethylenisch ungesättigten, quartären Ammoniumverbindungen der allgemeinen Formel (A)

[CH₂=C(-R₁)-CO-X-(CH₂)n-C(-R₂,-R₃)-CH₂-N(-R₄,-R₅,-R₆)]⊕ Y, (A),

wobei
R₁ für Wasserstoff oder die Methylgruppe,
R₂ und R₃ für Wasserstoff oder gleiche oder verschiedene Alkylgruppen mit 1 bis 4 C-Atomen,
R₄, R₅, und R₆ für gleiche oder verschiedene Alkylgruppen mit 1 bis 4 C-Atomen
n für 0 oder 1
X für -O- oder -NH- und
Y für einen anionischen Säurerest insbesondere Monoalkylsulfat, Hydrogensulfat oder Chlorid stehen,
mit geringen Mengen eines wenigstens zweifach ethylenisch ungesättigten Monomeren, das vernetzend wirkt, und ggf. weiteren nichtionischen Comonomeren der Formeln (B) und/oder (C)

CH₂=C(-R₁)-Z (B),

CH₂=C(-R₁)-CO-X-(CH₂)n-C(-R₂,-R₃)-CH₂-N(-R₄,R₆) (C),

wobei R₁, R₂, R₃, R₄, R₅, R₆ und X die in Formel (A) erwähnte Bedeutung haben und Z für -CO-N(-R₁,R₂), -CO-O-(CH₂)n-C(-R₂,-R₃)-CH₂-OH oder für -CN steht, bis zu einem Monomerenanteil von 70 Gew.-%, bezogen auf die Gesamtmenge der Monomeren (A), (B) und (C), nach dem Trocknen der wäßrigen Polymergele Produkte erhält, die das Mehrfache ihres Eigengewichtes an starken Säuren oder Basen aufnehmen können.

Gegenstand der Erfindung ist daher die
Verwendung von pulverförmigen, schwach vernetzten, polykationischen Homo- und Copolymerisaten mit einem Kornspektrum von 50 - 5000 µm aus quaternierten, monoethylenisch ungesättigten Carbonsäureaminoestern und oder- Carbonsäureamiden der allgemeinen Formel

[CH₂=C(-R1)-CO-X-(CH₂)ₙ-C(-R₂,-R₃)-CH₂-N(-R₄,-R₅,-R₆)]⊕ Y, (A),

wobei
R₁ für Wasserstoff oder die Methylgruppe,
R₂ und R₃ für Wasserstoff oder gleiche oder verschiedene Alkylgruppen mit 1 bis 4 C-Atomen,
R₄, R₅, und R₆ für gleiche oder verschiedene Alkylgruppen mit 1 bis 4 C-Atomen
n für 0 oder 1
X für -O- oder -NH- und
Y für einen anionischen Säurerest, insbesondere Monoalkylsulfat, Hydrogensulfat oder Chorid stehen,
wobei die Copolymerisate bis zu 70 Gew.-% nichtionische Monomere der Formeln (B) und/oder (C), bezogen auf die Menge der Monomeren A + B + C

CH₂=C(-R₁)-Z (B),

CH₂=C(-R₁)-CO-X-(CH₂)n-C(-R₂,-R₃)-CH₂-N(-R₄,R₆) (C),

wobei R₁, R₂, R₃, R₄, R₅, R₆ und X die in Formel (A) ewähnte Bedeutung haben und Z für -CO-N(-R₁,R₂), -CO-O-(CH₂)n-C(-R₂,-R₃)-CH₂-OH oder für -CN steht,
einpolymerisiert enthalten als Absorptionsmittel für wäßrige Säuren oder Laugen.

Bevorzugt werden Polymerisate verwendet, die in wäßriger Lösung durch chemische Katalyse mit Radikalbildnern oder mit UV-Licht hergestellt worden sind.

Den erfindungsgemäß verwendeten pulverförmigen Polymerisaten werden vorteilhaft zusätzlich konventionelle, poröse, organische und/oder anorganische Materialien und/oder Faserstoffe zugemischt.

Ethylenisch ungesättigte Monomere der Formel A können sein:
Mit Dimethylsulfat oder Methylchlorid quaterniertes Dimethylaminoethylacrylat, Dimethylaminopropylacrylat, Dimethylaminobutylacrylat, Diethylaminoethylacrylat, Diethylaminopropylacrylat, Diethylaminobutylacrylat, Dipropylaminoethylacrylat, Dipropylaminopropylacrylat, Dipropylaminobutylacrylat, N-(1,1-dimethyl-3-dimethylaminopropyl)acrylat und die entsprechenden Methacrylsäureester wie z.B. Dimethylaminoethylmethacrylat und Dimethylaminopropylmethacrylat.

Genauso zählen dazu:
Mit Dimethylsulfat oder Methylchlorid quaterniertes Dimethylaminoethylacrylamid, Dimethylaminopropylacrylamid, Dimethylaminobutylacrylamid, Diethylaminoethylacrylamid, Diethylaminopropylacrylamid, Diethylaminobutylacrylamid, Dipropylaminoethylacrylamid, Dipropylaminopropylacrylamid, Dipropylaminobutylacrylamid, N-(1,1-dimethyl-3-dimethylaminopropyl)-acrylamid und die Methacrylamid-Derivate wie z.B. Dimethylaminoethylmethacrylamid und Dimethylaminopropylmethacrylamid.

Unter die Monomeren der Formel B fallen:
Acrylamid, Methacrylamid, Mono- und Dialkyl-(C₁-C₄)-acrylamid bzw.-methacrylamid, Monoacrylsäure- und methacrylsäureester von Polyhydroxyverbindungen wie 2-Hydroxyethyl(meth-)acrylat, 3-Hydroxypropyl-(meth-)acrylat, 2-Hydroxypropyl-(meth-)acrylat, Hydroxybutyl-(meth-)acrylat, Diethylenglykolmono-(meth-)acrylat und Acrylnitril.

Zu den Monomeren der Formel C gehören:
Dimethylaminoethylacrylat, Dimethylaminopropylacrylat, Dimethylaminobutylacrylat, Diethylaminoethylacrylat, Diethylaminopropylacrylat, Diethylaminobutylacrylat, Dipropylaminoethylacrylat, Dipropylaminopropylacrylat, Dipropylaminobutylacrylat, N-(1,1-dimethyl-3-dimethylaminopropyl)acrylat und die entsprechenden Methacrylsäureester wie z.B. Dimethylaminoethylmethacrylat und Dimethylaminopropylmethacrylat.
Weiterhin sind zu nennen: Dimethylaminoethylacrylamid, Dimethylaminopropylacrylamid, Dimethylaminobutylacrylamid, Diethylaminoethylacrylamid, Diethylaminopropylacrylamid, Diethylaminobutylacrylamid, Dipropylaminoethylacrylamid, Dipropylaminopropylacrylamid, Dipropylaminobutylacrylamid, N-(1,1-dimethyl-3-dimethylaminopropyl)acrylamid und die Methacrylamid-Derivate wie z.B. Dimethylaminoethylmethacrylamid und Dimethylaminopropylmethacrylamid.

Mehrfunktionelle vernetzend wirkende Monomere mit mindestens zwei ethylenisch ungesättigten Gruppen, die mit quartären Ammoniumsalzen polymerisierbar sind und zweckmäßigerweise zum Teil wasserlöslich sein sollten, leiten sich von Acrylsäure- und Methacrylsäureestern, von Allyl- und Vinylestern ab.

Die Menge des Vernetzers beträgt, bezogen auf die Gesamtmenge der Monomeren (A), (B) und (C), 0,01 - 5 Gew.-%, bevorzugt 0,1 - 2 Gew.-%, besonders bevorzugt 0,2 -1 Gew.-%.

Zu nennen sind:
Polyacrylsäureester und Polymethacrylsäureester von Polyolen, Polyallylamine, Polyallylether, Polyacrylamid- und -methacrylamidverbindungen sowie Divinylverbindungen. Konkrete Beispiele aus diesen Stoffgruppen sind N,N'-Methylenbisacrylamid, N,N'-Methylenbismethacrylamid, Triallylamin, Tetraalkylammoniumchlorid, Trimethylolpropantriacrylat, Glycerinpropoxytriacrylat, Divinylbenzol und Tetraallyloxiethan.

Die Herstellung der erfindungsgemäßen säure- und laugeabsorbierenden Produkte geschieht durch radikalisch initiierte Polymerisation in wäßriger Lösung. Das Monomer der Formel A wird, ggf. mit dem Monomer der Formel B bzw. C, zusammen mit dem Vernetzungsmittel, das mehr als eine ethylenisch ungesättigte Gruppe aufweist, in wäßriger Lösung mittels radikalbildender Substanzen wie Wasserstoffperoxid und Natriumsulfit oder mittels UV-Licht zur Reaktion gebracht. Nach der Initiierung beginnt die Temperatur des Monomerengemischs entsprechend der molaren Polymerisationswärme und der Wärmekapazität des Systems bis zu einem Maximum zu steigen, um danach wieder langsam abzufallen. Der durchpolymerisierte, feste Gelblock wird anschließend zerkleinert, getrocknet und gemahlen. Zum Schluß erfolgt das Sieben und die Klassierung nach Korngrößen. Die Trocknung erfolgt bevorzugt bei Temperaturen von 120 - 160 °C.

Die vernetzten polyquartären Harze absorbieren bei Gegenwart von Wasser Säuren wie Schwefelsäure, Salzsäure, Salpetersäure, Phosphorsäure und Flußsäure, aber auch organische Säuren wie Ameisensäure, Essigsäure, Propionsäure, Acrylsäure, Crotonsäure und Alkylsulfonsäuren unter Gelbildung. Dabei quellen sie bis zu einem Mehrfachen ihres Eigenvolumens auf. Andererseits werden aber auch starke und schwache wäßrige Laugen wie Natronlauge, Kalilauge, Salmiakgeist und Aminlösungen aufgenommen und in eine feste Form übergeführt. Die Eigenschaft der erfindungsgemäßen Polymerprodukte, Schwefelsäure unter Quellung zu absorbieren, ermöglicht auch eine Verwendung in Bleiakkumulatoren, sofern die Quaternierung des Monomeren mit Dimethylsulfat durchgeführt wurde.

Die polykationischen Harze werden im allgemeinen nach dem Trocknen durch Mahlen und Sieben auf ein Kornspektrum von 50 bis 5000 µm, insbesondere 100 bis 2000 µm gebracht und in Pulverform verwendet. Es kann jedoch auch vorteilhaft sein, das absorbierende, pulverförmige Harz in Kunststoffvliese einzubinden und so vor Verschüttungen und Verwehungen zu schützen. Weiterhin können vor bzw. nach der Polymerisation Mischungen mit leicht verfügbaren und wohlfeilen Ballaststoffen wie Sand, Kieselgur, Kunststoffasern und zerkleinerten Kunststoffabfällen hergestellt werden.

Bei den nachfolgenden Beispielen werden folgende Abkürzungen verwendet:
- DIMAPA-Quat:: Lösung von mit CH₃Cl quaterniertem Dimethylaminopropylacrylamid (60 Gew.-%),
- DIMAPA: Dimethylaminopropylacrylamid,
- ADAME: Acrylsäuredimethylaminoethanolester
- AcA :: 40 Gew.-%ige Lösung von Acrylamid,
- MBAA :: N,N'-Methylenbisacrylamid,
- ABAH :: Azo-bis(2-amidinopropan)-dihydrochlorid,
- BHP :: t-Butylhydroperoxid.

### Beispiel 1:

100 Teile DIMAPA-Quat und 56 Teile AcA werden in 45 Teile Wasser gegeben und mit Salzsäure auf einen pH-Wert von ca. 4,5 eingestellt. Danach werden 0,21 Teile MBAA zugesetzt. Die Polymerisation wird nach 1-stündigem, kräftigem Spülen der Monomerenlösung mit Stickstoff mittels 0,03 Teilen BHP und 3,2 Teilen Natriumpyrosulfit bei Raumtemperatur gestartet. Nach einer Initiierungsphase beginnt die Temperatur zu steigen und erreicht bei Polymerisationsende ca. 70°C. Danach wird das Gel bei 150°C getrocknet und anschließend gemahlen (Retsch-Mühle, Typ ZM 1). Das erhaltene Pulver wird auf eine Siebmaschine gegeben und die Partikel unter 100 µm bzw. über 2000 µm abgetrennt.

### Beispiel 2:

50 Teile DIMAPA-Quat, 22,7 Teile DIMAPA und 56 Teile AcA werden in 65 Teile Wasser gegeben. und mit Schwefelsäure auf einen pH-Wert von ca. 4,5 eingestellt. Danach werden 0,21 Teile MBAA zugesetzt. Die Polymerisation wird nach 1-stündigem, kräftigem Spülen der Monomerenlösung mit Stickstoff mittels 0,03 Teilen BHP und 3,2 Teilen Natriumpyrosulfit bei Raumtemperatur gestartet. Nach einer Initiierungsphase beginnt die Temperatur zu steigen und erreicht bei Polymerisationsende ca. 70°C. Danach wird das Gel bei 150°C getrocknet und anschließend gemahlen sowie gesiebt (100 - 2000 µm).

### Beispiel 3:

Entsprechend Beispiel 1 mit dem Unterschied, daß 30 Teile DIMAPA-Quat, 32 Teile ADAME und 10 Teile Hydroxyethylacrylat in 45 Teile Wasser gegeben und mit Schwefelsäure auf einen pH-Wert von ca. 4,5 eingestellt werden. Die weitere Aufarbeitung erfolgt wie beschrieben.

Anwendungstechnische Prüfungen:
Typische Absorptionswerte (g/g) für Produkte der Beispiele 1-3 bei Flüssigkeiten verschiedenen Säure- und Laugegehaltes zeigt die nachfolgende Tabelle:

| **Beispiel** | **1** | **2** | **3** |
|---|---|---|---|
| Salzsäure, konz. | 27 | 26 | 26 |
| Schwefelsäure, 35 % | 28 | 27 | 25 |
| Salpetersäure, konz. | 49 | 43 | 41 |
| Essigsäure, 70 % | 69 | 68 | 66 |
| Phosphorsäure, 50 % | 31 | 31 | 29 |
| Natronlauge, 25 % | 30 | 29 | 29 |
| Kochsalzlsg.(0,9 %) | 32 | 32 | 30 |
| Ammoniak, 25 % | 33 | 32 | 31 |

## Patentansprüche

1. Verwendung von pulverförmigen, schwach vernetzten, polykationischen Homo- und Copolymerisaten mit einem Kornspektrum von 50 - 5000 µm aus quaternierten, monoethylenisch ungesättigten Carbonsäureaminoestern und/oder- Carbonsäureamiden der allgemeinen Formel
[CH₂=C(-R₁)-CO-X-(CH₂)ₙ-C(-R₂,-R₃)-CH₂-N(-R₄,-R₅,-R₆)]⊕ Y, (A),
wobei
R₁ für Wasserstoff oder die Methylgruppe,
R₂ und R₃ für Wasserstoff oder gleiche oder verschiedene Alkylgruppen mit 1 bis 4 C-Atomen,
R₄, R₅, und R₆ für gleiche oder verschiedene Alkylgruppen mit 1 bis 4 C-Atomen
n für 0 oder 1
X für -O- oder -NH- und
Y für einen anionischen Säurerest, insbesondere Monoalkylsulfat, Hydrogensulfat oder Chorid stehen,
wobei die Copolymerisate bis zu 70 Gew.-% nichtionische Monomere der Formeln (B) und/oder (C), bezogen auf die Menge der Monomeren A + B + C
CH₂=C(-R₁)-Z (B),
CH₂=C(-R₁)-CO-X-(CH₂)ₙ-C(-R₂,-R₃)-CH₂-N(-R₄,R₆) (C),
wobei
R₁, R₂, R₃, R₄, R₅, R₆ und X die in Formel (A) erwähnte Bedeutung haben und
Z für -CO-N(-R₁,R₂), -CO-O-(CH₂)ₙ-C(-R₂, -R₃)-CH₂-OH oder für -CN steht,
einpolymerisiert enthalten als Absorptionsmittel für wäßrige Säuren oder Laugen.

2. Verwendung nach Anspruch 1, dadurch gekennzeichnet, daß die Polymerisate in wäßriger Lösung durch chemische Katalyse mit Radikalbildnern oder mit UV-Licht hergestellt worden sind.

3. Verwendung nach den Ansprüchen 1-2, dadurch gekennzeichnet, daß ein Kornspektrum von 100 - 2000 µm vorliegt.

4. Verwendung nach den Ansprüchen 1 - 3, dadurch gekennzeichnet, daß den pulverförmigen Polymerisaten zusätzlich konventionelle, poröse, organische und/oder anorganische Materialien und/oder Faserstoffe zugemischt worden sind.

## Claims

1. Use of powdered, slightly crosslinked, polycationic homo- and copolymerizates having a grain spectrum of 50 - 5,000 µm, consisting of quaternized, monoethylenically unsaturated carboxylic aminoesters and/or carboxylic amides of general formula
[CH₂=C(-R₁)-CO-X-(CH₂)ₙ-C(-R₂,-R₃)-CH₂-N(-R₄,-R₅,-R₆)]^{⊕} Y (A)
wherein
R₁ represents hydrogen or the methyl group;
R₂ and R₃ represent hydrogen or alkyl groups having from 1 to 4 C atoms, which may be the same or different;
R₄, R₅ and R₆ represent alkyl groups having from 1 to 4 C atoms, which may be the same or different;
n represents 0 or 1;
X represents -O- or -NH-; and
Y represents an anionic acid residue, particularly monoalkyl sulfate, hydrogen sulfate or chloride;
the copolymerizates containing polymerized therein up to 70 wt.-% of non-ionic monomers of formulas (B) and/or (C) relative to the amount of monomers A+B+C
CH₂=C(-R₁)-Z (B)
CH₂=C(-R₁)-CO-X-(CH₂)ₙ-C(-R₂,-R₃)-CH₂-N(-R₄,-R₆) (C)
wherein
R₁, R₂, R₃, R₄, R₅, R₆, and X have the meanings mentioned in formula (A); and
Z represents -CO-N(-R₁,R₂), -CO-O-(CH₂)ₙ-C(-R₂ ,-R₃)-CH₂-OH or -CN;
as absorbents for aqueous acids or bases.

2. The use according to claim 1, characterized in that the polymerizates are prepared in aqueous solution by chemical catalysis using radical formers or UV light.

3. The use according to claims 1 - 2, characterized in that the grain spectrum is 100 - 2,000 µm.

4. The use according to claims 1 - 3, characterized in that the powdered polymerizates are additionally added with conventional porous organic and/or inorganic materials and/or fibrous materials.

## Revendications

1. Utilisation, comme absorbant pour des solutions aqueuses d'acides ou de bases, d'homopolymères et de copolymères pulvérulents, faiblement réticulés, polycationiques, à spectre granulométrique de 50 - 5000 µm, constitués d'aminoesters quaternaires, insaturés de type monoéthylénique, d'acide carboxylique et/ou d'amides d'acide carboxylique de formule générale
[CH₂=C(-R₁)-CO-X-(CH₂)ₙ-C(-R₂,-R₃)-CH₂-N(-R₄,-R₅,-R₆)]^{Q} Y, (A)
où R₁ représente l'oxygène ou le radical méthyle,
R₂ et R₃ représentent l'oxygène ou des radicaux alkyle, identiques ou différents, contenant de 1 à 4 atomes de C,
R4, R5 et R6 représentent des radicaux alkyle identiques ou différents, contenant de 1 à 4 atomes de C
n vaut 0 ou 1
X représente -O- ou -NH- et
Y représente un radical acide anionique, en particulier un monosulfate d'alkyle, un sulfate acide ou un chlorure,
les copolymères contenant, sous forme polymérisée, jusqu'à 70% en poids de monomères non ioniques des formules (B) et/ou (C), par rapport à la quantité des monomères A + B+ C
CH₂=C(-R₁)-Z (B)
CH₂=C(-R₁)-CO-X-(CH₂)ₙ-C(-R₂,-R₃)-CH₂-N(-R₄,-R₆) (C)
où R₁, R₂, R₃, R₄, R₅, R₆ et X ont la signification mentionnée dans la formule (A) et
Z représente -CO-N(-R₁,R₂), -CO-O-(CH₂)ₙ-C(-R₂,-R₃)-CH₂-OH ou -CN.

2. Utilisation selon la revendication 1, caractérisée par le fait que les polymères ont été fabriqués en solution aqueuse par catalyse chimique avec des initiateurs de polymérisation ou avec de la lumière ultraviolette.

3. Utilisation selon l'une des revendications 1 ou 2, caractérisée par le fait que le spectre granulométrique est de 100-2000 µm.

4. Utilisation selon l'une des revendication 1 à 3, caractérisée par le fait que l'on mélange en outre aux polymères pulvérulents, des matériaux classiques, poreux, organiques et/ou minéraux et/ou des matériaux fibreux.
